# EUROPÄISCHE PATENTSCHRIFT

(11) **EP 0 802 248 B1**
(45) Veröffentlichungstag und Bekanntmachung des Hinweises auf die Patenterteilung: **03.03.2004**
(21) Anmeldenummer: 97105741.9
(22) Anmeldetag: 08.04.1997
(51) Int. Cl.: C09F 9/00, C09D 167/08, C07C 51/41

(54) **Mischungen von Carbonsäuresalzen und Carbonsäureestern und deren Verwendung**
Mixtures of carboxylic acid salts and esters and their use
Mélanges de sels et d'esters d'acide carboxylique et leur application

(30) Priorität: 19.04.1996 DE 19615450; 31.05.1996 DE 19621866
(43) Veröffentlichungstag der Anmeldung: 22.10.1997
(73) Patentinhaber: Borchers GmbH, 40764 Langenfeld (DE)
(72) Erfinder: Edelmann, Dirk, Dr., 42119 Wuppertal (DE); Pattou, Alain, 81290 Viviers les Montagnes (FR); Link, Günter, 38644 Goslar (DE)
(74) Vertreter: Pettrich, Klaus-Günter, Dr.

(56) Entgegenhaltungen:
- DE-A- 4 236 697
- US-A- 4 689 266

## Beschreibung

Die Erfindung betrifft Mischungen aus Salzen langkettiger Carbonsäuren, mit Carbonsäureestern, sowie deren Verwendung als Sikkative für oxidativ trocknende Lacke.

Es ist bekannt als Trockenstoffe für oxidativ trocknende Lacke Metallseifen z.B. von Isooctansäure, Naphthensäure, Leinölfettsäuren oder auch Säuren mit Alkylenoxid-Einheiten, die durch direkte Umsetzung von Metallen oder Metalloxide bzw. -hydroxide und Carbonsäuren hergestellt werden können, zu verwenden. Eine Aufstellung der gebräuchlichen Trockenstofftypen und Kombinationen und Herstellungsverfahren findet sich z.B. im Lehrbuch der Lacke und Beschichtungen, Band III, 1976, Seite 296 bis 476 oder in Ullmann, Encyclopädie der Chemie, Band 23, Seite 421 bis 424, 1979.

Diese herkömmlichen Trockenstoffe werden zumeist in flüchtigen, organischen Lösemitteln gelöst bzw. direkt in organischen Lösemitteln hergestellt. Auch Trockenstoffe, die in jüngerer Zeit für Wasser enthaltende, oxidativ trocknende Lacksysteme entwickelt worden sind, werden zunächst in organischen Lösemitteln, wie z.B. Xylol, gefertigt. Als Beispiel solcher wasserverdünnbaren Trockenstoffe mögen die in der Patentanmeldung DE-A 42 36 697 genannten Verbindungen dienen.

Seit einiger Zeit ist man intensiv bestrebt, die Anteile von bei Raumtemperatur flüchtigen, organischen Lösemitteln in den verschiedensten Lacksystemen, auch in oxidativ trocknenden Lacken und somit auch in den ihnen zugesetzten Sikkativen zu minimieren. Dies geschieht vor allem aus ökologischen und toxischen Gesichtspunkten, aber auch unter Sicherheitsaspekten bei der Herstellung und Applikation der entsprechenden Lacke.

Aufgabe der vorliegenden Erfindung war es somit, Trockenstoffe bereitzustellen, die weder im Herstellungsprozeß noch in der Liefer- wie Applikationsform bei Raumtemperatur flüchtige organische Lösemittel enthalten.

Weiterhin war es Aufgabe der vorliegenden Erfindung, problemlos verarbeitbare und lagerstabile Sikkative mit wesentlich höheren Metallgehalten bereitzustellen, als dies bei nach dem Stand der Technik für bekannte, lösemittelfreie Trockenstoffe, z.B. Kobaltlinolat, der Fall ist. Somit kann die effektive Menge der dem Lack zuzusetzenden Sikkative deutlich vermindert werden.

Eine weitere Aufgabe der vorliegenden Erfindung war es, Sikkativformulierungen bereitzustellen, die in 100 %-lösemittelfreien, oxidativ-trocknenden Lacksystemen (sogenannten "High-Solid"-Systemen) eingesetzt werden können, ohne durch ihre Zugabe organische und bei Raumtemperatur flüchtige Bestandteile in das Lacksystem einzutragen.

Diese Aufgaben können überraschend gelöst werden durch Mischungen (Trockenstoffe) in denen das entsprechende Metallkation bzw. die entsprechenden Metallkationen (in sogenannten "Kombinationstrocknern") mit 2-Ethylhexansäure oder anderen organischen Carbonsäuren (teilweise) neutralisiert sind und in bei Raumtemperatur nicht-flüchtigen, niedrigviskosen und neutralen langkettigen Carbonsäureestem gelöst sind.

Gegenstand der Erfindung sind Mischungen aus 10 bis 90 Gew.-% Metallsalzen von langkettigen Carbonsäuren der Formel (I)

(Mⁿ⁺)(X⁻)ₙ (I),

in welcher
- M: für ein Metall wie Co. Mn, Fe, Pb, V, Ni, Cu, Zn, Sn, Ca, Ba, Sr, Al, K, Cr, Sb, Bi,
- X: für C₆-C₁₄-aliphatisches und/oder aromatisches Carboxylat und
- n: für die Zahl 1, 2, 3, 4 oder 5 steht,
und
90 bis 10 Gew.-% eines Carbonsäureesters der Formel (II) 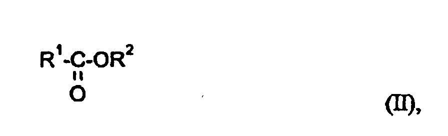 in welcher
- R¹: einen gesättigten oder ungesättigten aliphatischen C₁₄-C₂₂-Rest bedeutet und
- R²: für C₁-C₄-Alkyl steht.

Ein weiterer Gegenstand der Erfindung ist die Verwendung der erfindungsgemäßen Mischungen als Trockenstoffe (Sikkative) in oxidativ trocknenden Lacken.

Im Sinne der Erfindung sind Trockenstoffe ionogene Metallverbindungen, die ungesättigten Ölen und/oder Bindemitteln (als oxidativ trocknender Bestandteil in Lacken) zugesetzt werden, um deren Trockenzeit, d.h. den Übergang ihrer Filme von der flüssigen in die feste Phase erheblich zu verkürzen. Dieser Vorgang erfolgt durch die oxidative Vernetzung der Öle und/oder Bindemitteln zu dreidimendionalen Netzwerken. Diese Reaktion wird durch Metallkationen beschleunigt. Trockenstoffe liegen üblicherweise in flüssiger oder fester Form vor. In gelöster Form bezeichnet man Trockenstoffe auch als Sikkative.

Besonders geeignete Ester der Formel (II) im Sinne der Erfindung sind Methylester gesättigter sowie ungesättigter Fettsäuren sowie synthetische oder natürliche Mischungen derselben, z.B. solcher bei Raumtemperatur nicht-flüchtigen und niedrigviskosen Lösemittel sind besonders geeignet:
Ölsäuremethylester, Linolsäure(9, 12)methylsäureester, Ricinensäuremethylester, Ricinolsäuremethylester, α-Elaeostearinsäuremethylester usw.

Besonders bevorzugt im Sinne der Erfindung sind Gemische aus Methylestern von solchen Fettsäuren, die sich nach der Hydrolyse in der Natur vorkommender Öle ergeben.

Beispiele solcher natürlicher Quellen für Fettsäuregemische, die durch Veresterung zu den in der vorliegenden Erfindung als Lösemittel für Trockenstoffe beanspruchten Estern führen sind vorzugsweise:
Sojaöl, Rapsöl, Tallöl, Sonnenblumenöl usw.

Die daraus resultierenden Gemische von Fettsäureestern sind als Handelsprodukte verfügbar.

Als anionisch-organischer Rest der als Trockenstoffe eingesetzten Metallseifen können die als Stand der Technik bekannten Carbonsäuren verwendet werden. Bevorzugte Verbindungen sind beispielsweise 2-Ethylhexansäure oder Naphthensäure bzw. Gemische derselben bei Sikkativen mit mehreren unterschiedlichen Metallkationen.

Die erfindungsgemäßen Sikkative sind niedrigviskose, lagerstabile, klare, gegebenenfalls farbige Flüssigkeiten, die keine bei Raumtemperatur flüchtigen Bestandteile enthalten.

Ein weiterer Gegenstand der vorliegenden Erfindung ist die Anwendung der oben beschriebenen Sikkativformulierungen als Härtungsbeschleuniger für oxidativ trocknende Lacke.

Für die Anwendung können die erfindungsgemäßen Sikkative sowohl alleine als auch in beliebiger Abmischung miteinander verwendet werden. Letzthin können auch Trockenstoffe mit verschiedenen nicht-flüchtigen Verbindungen versetzt werden oder verschiedene Metallkationen bzw. Metalloxid-Kationen aufweisen.

Die erfindungsgemäßen Trockenstoffe bzw. Sikkative werden erfindungsgemäß in reiner Form, d.h. ohne weiteren Zusatz von flüchtigen-organischen Lösemitteln oder Wasser eingesetzt.

Die Einsatzmenge der Trockenstoffe bzw. Sikkative richtet sich nach dem ungesättigten Charakter der Bindemittel und nach der Art der eingesetzten Bindemittel in den Lacken. Weitere Faktoren, die die Einsatzmenge beeinflussen, sind z.B. Pigmente und Art sowie Menge von Antioxidationsmitteln und weitere Additive wie z.B. Netzmittel.

In der Regel werden die erfindungsgemäß vorliegenden Sikkative in derselben Metallkonzentration (d.h. Metallgehalt bezogen auf Bindemittel) eingesetzt wie selbige nach dem Stand der Technik hergestellte lösemittelhaltige Sikkative. Es ist somit ein wichtiger Vorteil der erfindungsgemäß vorliegenden Sikkative, daß sie dieselben oder zumindest keine schlechteren Trocknungseigenschaften besitzen als herkömmliche lösemittelhaltige Sikkative. Als Regel kann gelten, daß die Trockenstoffe in Mengen von 0,005 % bis 1 Gew.-%, vorzugsweise bis 0,7 Gew.-%, bezogen auf den Metallgehalt der Trockenstoffe im Verhältnis zu dem Festkörper des Lackbindemittels eingesetzt werden.

Die neuen Sikkative können jedem auf organischen Lösemitteln basierenden oxidativ trocknendem Lack und weiterhin jedem lösemittelfreien "High-Solid" Lack zugegeben werden.

### Beispiele

Die Mengen der Sikkative beziehen sich auf das Gesamtgewicht der Überzugsmischung.

### A) Herstellung der Ausgangsverbindungen

1. Darstellung eines Co-Sikkatives in Sonnenblumenölmethylester (z.B.) Die Herstellungsvorschriften und die Kenndaten der erfindungsgemäßen Trockenstoffe sind ab Seite 10 ff. beschrieben.

### B) Anwendungsbeispiele

1. Trocknung eines Lackes auf Basis von COPORAB 267.9 (Fa. Robbe)
Es wurde folgender handelsüblicher Lack mit folgender Zusammensetzung sikkativiert:
52,2 % COPOROB 267.9 (90 %iges Alkydharz in Testbenzin)
1,03 %Bentone Gel
0,41 % Borchigen SN 88
37,6 %Titandioxid
8,50 %Testbenzin K60
0,26 % Borchinox M2

Dieser Stammansatz wurde mit verschiedenen Sikkativen bzw. Kombinationen derselben, versetzt und als 100 µm-Naßfilm aufgetragen. Von diesen Filmen wurden die Trocknungszeit (Braive-Tisch, klebfrei) und die Pendelhärten (Persoz) bestimmt. Die Daten sind in Tabelle 1 zusammengetragen.

**Tabelle 1:**

| Trochnungsversuche mit Lacken auf Basis COPOROB 267.90 | | | | | |
|---|---|---|---|---|---|
| Proben-Nr. | Sikkativ | Trocknungszeit | Pendelhärte (Persoz) (s) | | |
| | | | 2d | 4d | 7d |
| 1 V | 0,5 % Tr. 69 in TB¹⁾ | 7 h | 27 | 42 | 55 |
| 2 | 0,5 % Tr. 69 in MESJ²⁾ | 9,3 h | 31 | 42 | 76 |

| | | | | | |
|---|---|---|---|---|---|
| V: Vergleich ¹⁾ Tr.69 ist eine Mischung aus Cobaltoctoat und Zirkoniumoctoat mit einem Co-Anteil von 6 % und einem Zr-Anteil von 9 %, 72 %ig gelöst in Testbenzin (Vergleichsprobe) | | | | | |
| ²⁾ Trockner 69 MESJ ist eine Mischung aus Cobalt- und Zirkoniumoctoat mit einem Co-Anteil von 6 % und einem Zr-Anteil von 9 %; 72 %ig gelöst in Sojaölmethylester | | | | | |

2. Trocknung eines Lackes auf Basis von Uralac XP 263 AH (Fa. DSM)
Es wurde wie in 1. erläutert ein Stammansatz hergestellt, der in seiner Zusammensetzung dem in 1. entspricht, nur wurde das Bindemittel 1:1 ausgetauscht und das obengenannte benutzt. Uralac XP263® ist 100 %iges, oxidativ trocknendes Alkydharz auf Leinölbasis. Die Applikation und die Prüfmethoden bleiben unverändert. Die Ergebnisse sind in Tabelle 2 zusammengefaßt.

**Tabelle 2:**

| Trocknungsversuche mit Lacken auf Basis Uralac XP 263AH | | | | | |
|---|---|---|---|---|---|
| Proben-Nr. | Sikkativ | Trocknungszeit | Pendelhärte (Persoz) (s) | | |
| | | | 1d | 4d | 7d |
| 3 V | 0,3 % Co10TB¹⁾ | | | | |
| | 2,0 % Zr12 TB²⁾ | 2,4 h | 40 | 34 | 36 |
| | 1,0 % Co 10 TB³⁾ | | | | |
| 4 | 0,25 % Co12MESJ⁴⁾ | | | | |
| | 1,33 % Zr18MESJ⁵⁾ | 4,3 h | 41 | 34 | 34 |
| | 1,0 % Ca10 TB | | | | |

| | | | | | |
|---|---|---|---|---|---|
| V: Vergleich ¹⁾ Co10 TB ist eine 64 %ige Lösung von Cobaltoctoat in Testbenzin (Vergleichsprobe) | | | | | |
| ²⁾ Zr12 TB ist eine 50 %ige Lösung von Zirkoniumoctoat in Testbenzin (Vergleichsprobe) | | | | | |
| ³⁾ Co10 TB ist eine 55 %ige Lösung von Co-Octoat in Testbenzin (Vergleichsprobe) | | | | | |
| ⁴⁾ Co12 MESJ ist eine 74 %ige Lösung von Cobaltoctoat in Sojaölmethylester | | | | | |
| ⁵⁾ Zr18 MESJ ist eine 75 %ige Lösung von Zirkoniumoctoat in Sojamethylester | | | | | |

3. Trocknung eines Lackes auf Basis von Uralac XP 98 AH (Fa. DSM)
Es wurde wiederum wie in 1. erläutert ein Stammansatz hergestellt, bei dem das Bindemittel 1:1 gegen Uralac XP 98 AH ausgetauscht wurde. Diesem Stammansatz wurden die in Tabelle 3 angegebenen Sikkative zugefügt und der so gefertigte Lack 100 µm dick auf Glas appliziert und abgeprüft. Die ermittelten Werte sind in Tabelle 3 zusammengefaßt.

**Tabelle 3:**

| Trocknungsversuche mit Lacken auf Basis Uralac XP 98 AH | | | | | |
|---|---|---|---|---|---|
| Proben-Nr. | Sikkativ | Trocknungszeit | Pendelhärte (Persoz) (s) | | |
| | | | 1d | 4d | 7d |
| 5 V | 0,24 % Co 12 TB | 3,75 h | 52 | 51 | 52 |
| | 1,17 % Zr 18 TB | | | | |
| 6 | 0,25 % Co 12 MERP¹⁾ | 4,0 h | 56 | 53 | 51 |
| | 1,17 % Zr 18 MERP²⁾ | | | | |
| 7V | 0,25 % Co 12 TB | | | | |
| | 0,31 % Zn 16 TB³⁾ | 5,5 h | 52 | 46 | 42 |
| | 0,25 % Mn 10 TB⁴⁾ | | | | |
| 8 | 0,25 % Co 12 MESJ | | | | |
| | 0,31 % Zn 16 MESJ⁵⁾ | 6,15 h | 49 | 47 | 45 |
| | 0,25 % Mn 10 MESJ⁶⁾ | | | | |

| | | | | | |
|---|---|---|---|---|---|
| V: Vergleich ¹⁾ Co 12 MERP ist eine 74 %ige Lösung von Cobaltoctoat in Rapsölmethylester | | | | | |
| ²⁾ ZR 18 MERP ist eine 75 %ige Lösung von Zirkoniumoctoat in Rapsöl-methylester | | | | | |
| ³⁾ Zn 16 TB ist eine 71 %ige Lösung von Zinkoctoat in Testbenzin (Vergleichsprobe) | | | | | |
| ⁴⁾ Mn 10 TB ist eine 70 %ige Lösung von Manganoctoat in Testbenzin (Vergleichsprobe) | | | | | |
| ⁵⁾ Zn 16 MESJ ist eine 71 %ige Lösung von Zinkoctoat in Sojaölmethylester | | | | | |
| ⁶⁾ Mn 10 MESJ ist eine 70 %ige Lösung von Manganoctoat in Sojamethylester | | | | | |

4. Trocknung eines Lackes auf Basis von Synolac E94154 (Fa. Cray Valley)
Es wurde analog zu 1. ein Stammansatz hergestellt, in welchem das Bindemittel 1:1 gegen Synolac E94154 ausgetauscht wurde. Dieser Lack wurde anschließend mit den in Tabelle 4 angegebenen Mengen an Sikkativen versetzt, analog zu 1. appliziert und vermessen. Die Prüfergebnisse sind in Tabelle 4 zusammengestellt. Bei Synolac E94 195 handelt es sich um ein 90 %iges oxidativ trocknenden Alkydharz auf Leinölbasis.

**Tabelle 4:**

| Trocknungsversuche mit Lacken auf Basis von Synolac E94 154 | | | | | |
|---|---|---|---|---|---|
| Proben-Nr. | Sikkativ | Trocknungszeit | Pendelhärte (Persoz) (s) | | |
| | | | 1d | 4d | 7d |
| 9 V | 0,25 % Co 12 TB | | | | |
| | 0,31 % Zn 16 TB | 9,5 h | 42 | 42 | 38 |
| | 0,25 % Mn 10 TB | | | | |
| 10 | 0,25 % Co 12 DP93¹⁾ | | | | |
| | 0,31 % Zn 16 DP93²⁾ | 8,75 | 43 | 43 | 39 |
| | 0,25 % Mn 10 DP93³⁾ | | | | |

| | | | | | |
|---|---|---|---|---|---|
| V: Vergleich ¹⁾ Co 12 DP93 ist eine 74 %ige Lösung von Cobaltoctoat in Tallölmethylester | | | | | |
| ²⁾ Zn 16 DP93 ist eine 71 %ige Lösung von Zinkoctoat in Tallölmethylester | | | | | |
| ³⁾ Mn 10 DP93 ist eine 70 %ige Lösung von Manganoctoat in Tallölmethylester | | | | | |

### A) Darstellung der Ausgangsverbindungen

1. Darstellung eines Kobalttrockenstoffes in Tallölmethylester
   In einem Reaktor mit einem Volumen von 6000 werden 2725 kg 2-Ethylhexansäure und 825 kg Tallölmethylester gegeben. Unter Rühren werden weiterhin 50 kg Wasser und 25 kg Butyldiglykol gegeben. Diese Mischung wird 10 min bei 40 bis 50°C gerührt.
   Innerhalb von 20 min werden 2000 kg Kobalt(II)hydroxid zugegeben. Die Reaktionsenergie erwärmt den Ansatz auf ca. 85 bis 90°C. Nach erfolgter Zugabe des Kobalthydroxides wurde bei einer Sumpftemperatur von 118°C das bei der Reaktion gebildete Wasser abdestilliert.
   Ist alles Wasser (300 l) abdestilliert, wird die Destillationsbrücke durch einen Kühler ersetzt und der Ansatz bei 112-120°C ca. 1 h gerührt.
   Um Reste von Wasser aus dem Gemisch zu entfernen, werden 25 kg Primisil 511 zugesetzt und anschließend 500 kg Tallölmethylester. Bei einer Temperatur von 115°Cwerden die unlöslichen Bestandteile abfiltriert. Der Filterrückstand wird zweimal mit je 200 kg Tallölmethylester gespült und die Filtrate in einen Container gegeben. Mit der Zugabe von weiteren 100 kg Tallölmethylester wird dann im fertigen Produkt ein Metallgehalt von 12 Gew.-% eingestellt.
   Das Produkt ist eine violette, klare Flüssigkeit.
2. Darstellung eines Kobalt-Trockenstoffes gelöst in Sojaölmethylester
   In einem 6000 Reaktionsgefäß werden 3225 kg 2-Ethylhexansäure eingewogen. Weiter werden 50 kg Wasser und 260 kg Butyldiglykol zugegeben und das Gemisch bei 40°C vermischt. Dann werden 1000 kg Kobalt(II)hydroxid innerhalb von 20 min vorsichtig hinzugegeben, wobei die Reaktionsmischung auf eine Temperatur von 85 bis 90°C gebracht wird und bei dieser Temperatur 30 min gerührt wird.
   Anschließend wird bei einer Sumpftemperatur von 118°C das gebildete Wasser und andere flüchtige Bestandteile abdestilliert. Nach Beendigung der Reaktion wird noch weitere 30 min bei 115°C gerührt.
   Das Rohprodukt wird nun in einen 5000 l Reaktor gefüllt und die Leitung mit 100 1 Sojaöl gespült und mit dem Rohprodukt vereinigt. Das Gemisch wird nun durch Filtration von festen Nebenprodukten gereinigt, wobei der Filtratrückstand mit insgesamt 700 kg Sojaölmethylester gewaschen wird. Die vereinigten Filtrate ergeben das Produkt, welches durch weitere Sojaölzugabe auf einen Metallgehalt von 12 Gew.-% eingestellt wird. Man erhält in diesem Verfahren 5125 kg reines Produkt.
   Kobalt(II)octoat, gelöst in Sojaölmethylester ist eine violette, klare Flüssigkeit mit einer Viskosität von 200 bis 500 mPa.s.

## Patentansprüche

1. Mischungen aus 10 bis 90 Gew.-% Metallsalzen von langkettigen Carbonsäuren der Formel (I)
(Mⁿ⁺) (X⁻)ₙ (I),
in welcher
M für ein Metall wie Co. Mn, Fe, Pb, V, Ni, Cu, Zn, Sn, Ca, Ba, Sr, Al, K, Cr, Sb, Bi,
X für C₆-C₁₄-aliphatisches und/oder aromatisches Carboxylat und
n für die Zahl 1, 2, 3, 4 oder 5 steht,
und
90 bis 10 Gew.-% eines Carbonsäureesters der Formel (II) 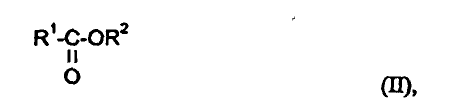 in welcher
R¹ einen gesättigten oder ungesättigten aliphatischen C₁₄-C₂₂-Rest bedeutet und
R² für C₁-C₄-Alkyl steht.

2. Verwendung der Mischungen nach Anspruch 1 als Sikkative.

## Claims

1. Mixtures prepared from 10 to 90 wt.% of metal salts of long-chain carboxylic acids of the formula (I)
(Mⁿ⁺) (X⁻)ₙ (I),
in which
M denotes a metal such as Co, Mn, Fe, Pb, V, Ni, Cu, Zn, Sn, Ca, Ba, Sr, Al, K, Cr, Sb, Bi,
X denotes a C₆-C₁₄ aliphatic and/or aromatic carboxylate and
n denotes the number 1, 2, 3, 4 or 5,
and
90 to 10 wt.% of a carboxylic acid ester of the formula (II) 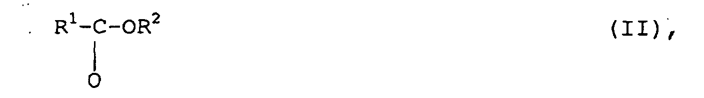 in which
R¹ denotes a saturated or unsaturated aliphatic C₁₄-C₂₂ residue and
R² denotes C₁-C₄ alkyl.

2. Use of the mixtures according to claim 1 as driers.

## Revendications

1. Mélanges contenant 10 à 90 % en poids de sels métalliques d'acides carboxyliques à chaînes longues de formule (I)
(Mⁿ⁺) (X⁻)ₙ (I),
dans laquelle,
M est un métal comme Co, Mn, Fe, Pb, V, Ni, Cu, Zn, Sn, Ca, Ba, Sr, Al, K, Cr, Sb, Bi,
X est un carboxylate aliphatique et/ou aromatique en C₆-C₁₄ et
n est un nombre entier égal à 1, 2, 3, 4 ou 5,
et
90 à 10 % en poids d'un ester d'acide carboxylique de formule (II) 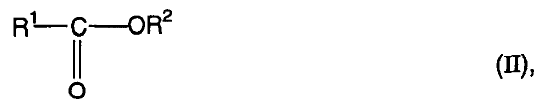 dans laquelle,
R¹ signifie un radical aliphatique saturé ou insaturé en C₁₄-C₂₂ et
R² est un radical alkyle en C₁-C₄.

2. Utilisation des mélanges selon la revendication 1 comme siccatifs.
